(19) Europäisches Patentamt | European Patent Office | Office européen des brevets

(11) **EP 4 252 023 B1**

(12) **FASCICULE DE BREVET EUROPEEN**

(45) Date de publication et mention
de la délivrance du brevet:
**17.09.2025 Bulletin 2025/38**

(21) Numéro de dépôt: **21816443.2**

(22) Date de dépôt: **24.11.2021**

(51) Classification Internationale des Brevets (IPC):
**G01S 5/00** *(2006.01)* **G01C 21/00** *(2006.01)*
**G01C 21/20** *(2006.01)*

(52) Classification Coopérative des Brevets (CPC):
**G01C 21/005; G01S 5/16;** G01S 3/782

(86) Numéro de dépôt international:
**PCT/EP2021/082765**

(87) Numéro de publication internationale:
**WO 2022/112294 (02.06.2022 Gazette 2022/22)**

(54) **PROCÉDÉ DE RECALAGE SUR UNE PLURALITÉ D'AMERS, PRODUIT PROGRAMME D'ORDINATEUR ET DISPOSITIF DE RECALAGE ASSOCIÉS**

NEUAUSRICHTUNGSVERFAHREN AUF DER BASIS EINER VIELZAHL VON REFERENZPUNKTEN UND ZUGEHÖRIGES COMPUTERPROGRAMMPRODUKT UND NEUAUSRICHTUNGSVORRICHTUNG

REORIENTING METHOD BASED ON A PLURALITY OF REFERENCE POINTS, AND ASSOCIATED COMPUTER PROGRAM PRODUCT AND REORIENTING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2020 FR 2012051**

(43) Date de publication de la demande:
**04.10.2023 Bulletin 2023/40**

(73) Titulaire: **THALES**
**92400 Courbevoie (FR)**

(72) Inventeur: **HEURGUIER, Dominique**
**92622 Gennevilliers Cedex (FR)**

(74) Mandataire: **Lavoix**
**2, place d'Estienne d'Orves**
**75441 Paris Cedex 09 (FR)**

(56) Documents cités:
**WO-A1-2015/078000 US-A1- 2010 171 663**

**Description**

La présente invention concerne un procédé de recalage sur une pluralité d'amers.

La présente invention concerne également un produit programme d'ordinateur et un dispositif de recalage associés à ce procédé de recalage.

Plus particulièrement, l'invention est applicable lors de la géolocalisation d'un dispositif mobile, notamment d'un engin mobile tel qu'un véhicule ou un aéronef, à l'aide des amers.

Par « amer », on entend tout objet naturel ou artificiel repérable par le dispositif mobile et dont la position est connue ou déterminable.

Selon des méthodes déjà connues dans l'état de la technique, il est possible de géolocaliser un dispositif mobile ou de recaler sa position déterminée par un autre moyen, en utilisant une pluralité d'amers.

Pour ce faire, le dispositif mobile est généralement apte à mesurer des directions (azimuts ou gisements) par rapport aux amers et/ou des distances jusqu'à ceux-ci. Ainsi, en analysant ces mesures et les positions connues des amers, il est possible généralement de déterminer ou de préciser la position du dispositif mobile. Plus spécifiquement, lorsque l'on ne dispose pas de l'information de cap, ou que celle-ci est de mauvaise précision, le dispositif peut se géolocaliser en utilisant des méthodes dites de relèvement qui exploitent les mesures d'écarts angulaires entre les amers.

Plus précisément, les méthodes de relèvement connues se reposent sur des mesures angulaires vis-à-vis de trois amers et exploitent les écarts angulaires observés entre ces amers, soit mesurés directement, soit obtenus par différence entre des mesures de gisement. Parmi ces méthodes, on retrouve notamment la méthode de Delambre, la méthode du barycentre, la méthode de relèvement italien, la méthode des deux arcs capables, etc.

Toutefois, les méthodes connues sont généralement limitées à l'utilisation de trois amers ou alors, à la combinaison de résultats obtenus par différents triplets d'amers dont les positions sont supposément précisément connues. De plus, elles ne donnent pas directement une estimation de la précision de géolocalisation.

WO2015078000 A1 concerne un procédé de positionnement de terminal, un serveur de positionnement et un terminal, le procédé consistant à : recevoir N premiers angles d'arrivée d'ondes mesurés par le terminal, le premier angle d'arrivée étant un angle de direction d'un signal de liaison descendante atteignant le terminal par rapport à la direction courante du terminal ; les N premiers angles d'arrivée d'ondes correspondent respectivement à N points d'émission, N étant un entier supérieur ou égal à 2 ; déterminer la localisation du terminal conformément aux N premiers angles d'arrivée d'ondes et aux informations de localisation des N points d'émission.

La présente invention a pour but de proposer une solution permettant de géolocaliser un dispositif mobile en exploitant simultanément un nombre quelconque d'amers de positions imprécises mais dont l'incertitude de position est connue (cette incertitude peut résulter des dimensions de l'amer et/ou de l'imprécision de relevé de position), avec une approche statistique globale optimale (prenant en compte à la fois des imprécisions sur la position des amers et des imprécisions sur les mesures de direction, tout en restant efficace et sans biais).

À cet effet, l'invention a pour objet un procédé de recalage conforme à la revendication 1.

Suivant d'autres aspects avantageux de l'invention, le procédé comprend des caractéristiques des revendications 2 à 7.

La présente invention a également pour objet un produit programme d'ordinateur comportant des instructions logicielles qui, lorsque mises en œuvre par un équipement informatique, mettent en œuvre le procédé tel que défini précédemment.

La présente invention a également pour objet un dispositif de recalage sur une pluralité d'amers lors de la géolocalisation d'un dispositif mobile, comprenant des moyens techniques adaptés pour mettre en œuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :

- [Fig 1] la figure 1 est une vue schématique d'un dispositif de recalage selon l'invention ;
- [Fig 2] la figure 2 est un organigramme d'un procédé recalage selon l'invention, le procédé étant mis en œuvre par le dispositif de recalage de la figure 1 ; et
- [Fig 3] la figure 3 est une vue schématique illustrant la mise en œuvre de l'une des étapes du procédé de la figure 2.

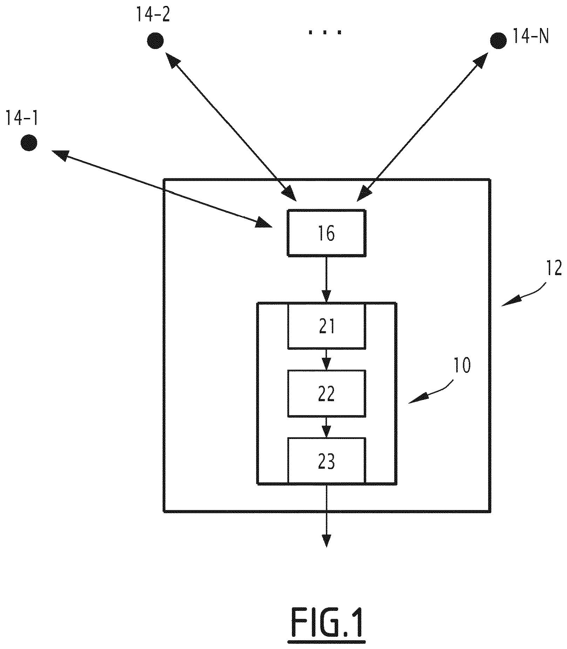

On a en effet représenté sur la figure 1, un dispositif de recalage 10 selon l'invention apte à déterminer ou à préciser la position d'un dispositif mobile 12 à chaque instant. Le dispositif mobile 12 est apte à se déplacer par exemple selon deux ou trois degrés de liberté par exemple dans un repère terrestre.

Selon un exemple de réalisation, le dispositif mobile 12 est un engin mobile, tel que par exemple un véhicule terrestre ou un aéronef, embarquant le dispositif de recalage 10. Dans le cas d'un aéronef, il peut s'agir d'un avion ou d'un hélicoptère pilotable par un opérateur et/ou par un système avionique à partir de celui-ci, ou d'un drone pilotable à partir d'un centre de contrôle distant par un opérateur et/ou par un système avionique adapté.

Selon un autre exemple de réalisation, le dispositif mobile 12 est porté par un opérateur ou par tout autre utilisateur et présente par exemple un téléphone portable. Dans ce cas, le dispositif de recalage 10 est par exemple intégré dans le dispositif mobile 12.

Le dispositif de recalage 10 est apte à déterminer la position du dispositif mobile 12 en utilisant des mesures de visée prises par rapport aux amers 14-1,...,14-N par au moins certains des capteurs d'une pluralité de capteurs 16.

Chaque amer 14-1,...,14-N présente un objet naturel ou artificiel disposé par exemple de manière fixe sur la surface terrestre selon une position connue avec une précision également connue et repérable depuis le dispositif mobile 12. Ainsi, chaque amer présente par exemple un pylône, une éolienne, un phare, un bâtiment, une montagne, un rocher, etc.

Chaque amer 14-1,...,14-N est par exemple identifiable par un identifiant qui lui est propre. En outre, selon un mode de réalisation particulier de l'invention, l'identifiant de chaque amer 14-1,...,14-N permet d'obtenir sa position en utilisant par exemple une base de données de positions prévue à cet effet. Une telle base de données peut être publiquement accessible ou alors, présenter un accès restreint.

Au moins certains des capteurs 16 sont aptes à déterminer des mesures de visée en relation avec chacun des amers 14-1,...,14-N.

Avantageusement selon l'invention, chaque mesure de visée déterminée par les capteurs 16 correspondants correspond à une mesure de gisement par rapport à un repère de référence.

Le repère de référence est par exemple lié au dispositif mobile 12 et dans le cas d'un engin mobile, présente par exemple un axe coïncidant avec le cap de cet engin. Selon un autre exemple, le repère de référence présente un repère terrestre.

Comme cela est visible sur la figure 1, le dispositif de recalage 10 comprend un module d'entrée 21, un module de calcul 22 et un module de sortie 23.

Le module d'entrée 21 est connecté aux capteurs 16 et est apte à acquérir l'ensemble des mesures déterminées par ces capteurs 16. Selon un exemple de réalisation, le module d'entrée 21 est connecté en outre à au moins un système, par exemple un système embarqué, apte à fournir une position connue du dispositif mobile 12. Cette position peut par exemple correspondre à la dernière position connue du dispositif mobile 12 ou la position qui a besoin d'être précisée.

Le module de calcul 22 est apte à analyser les données acquises par le module d'entrée 21 afin de fournir un résultat déterminant ou précisant la position du dispositif mobile 12.

Enfin, le module de sortie 23 est apte à fournir le résultat déterminé par le module de calcul 22 à tout système intéressé. Par exemple, le module de sortie 23 est apte à fournir à un écran d'affichage la position déterminée du dispositif mobile 12 pour l'afficher. Selon un autre exemple, le module de sortie 23 est apte à fournir cette position par exemple à un dispositif de précision apte à comparer cette position avec celle fournie par exemple par un système de géolocalisation de type GNSS, afin de fournir une position précise.

Chacun des modules 21 à 23 se présente par exemple sous la forme d'un logiciel mis en œuvre par un processeur adapté. En variante, au moins l'un de ces modules 21 à 23 se présente au moins partiellement sous la forme d'un circuit logique programmable, tel qu'un circuit de type FPGA (de l'anglais « Field Programmable Gate Array »).

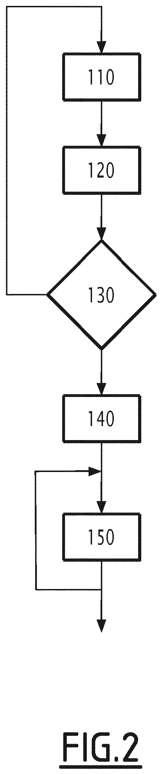

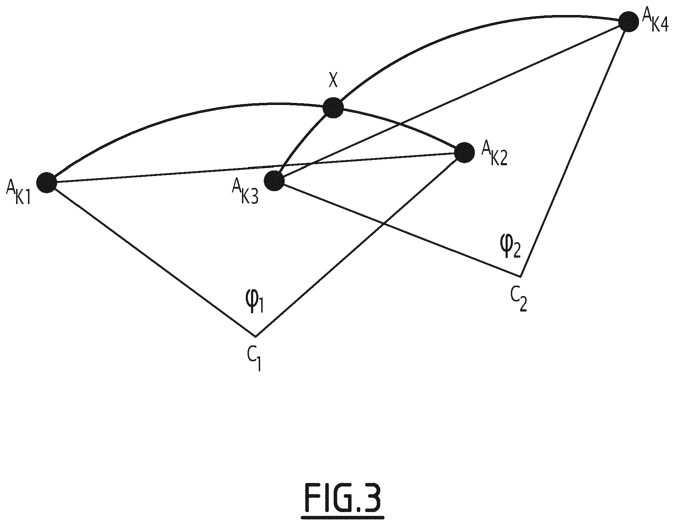

Le procédé de recalage sera désormais expliqué en référence à la figure 2 présentant un organigramme de ses étapes et à la figure 3 illustrant la mise en œuvre d'au moins une étape de ce procédé.

Initialement, il est considéré que le dispositif mobile 12 se déplace à proximité des amers 14-1, ..., 14-N et que dans une position fixe, les capteurs 16 effectuent M mesures de gisement par rapport à moins certains des amers 14-1, ..., 14-N. Par exemple, les capteurs 16 effectuent une mesure de gisement pour chacun des M amers visibles par ces capteurs 16. Avantageusement, selon l'invention, le nombre M peut être strictement supérieur à 3 et de manière générale, peut correspondre à un nombre quelconque inférieur ou égal à N.

Lors d'une étape initiale 110, le module d'entrée 21 acquiert l'ensemble des M mesures de gisement et les transmet au module de calcul 22. Le module de calcul 22 forme de ces mesures un vecteur de mesures de gisement dénoté par la suite par *AOA*.

Lors de la même étape 110, le module d'entrée 21 acquiert en outre les positions des amers 14-1, ..., 14-N ainsi que les précisions associées à ces positions. Ces données sont par exemple issues d'une base de données relative aux amers, telle que définie précédemment.

Lors de l'étape 120 suivante, le module de calcul 22 transforme le vecteur de mesures de gisement *AOA* en un vecteur d'écarts angulaires *ADOA*. Chaque composante $ADOA_{ij}$ de ce vecteur d'écarts angulaires *ADOA* correspond à un écart angulaire entre un couple d'amers. Autrement dit :

$$ADOA_{ij} = AOA_i - AOA_j,$$

où
$AOA_i$ et $AOA_j$ sont différentes composantes du vecteur de mesures *AOA*.

Ainsi, la composante $ADOA_{ij}$ correspond à un écart angulaire entre un couple d'amers correspondant aux indices *i* et *j*. Par la suite, par « couple d'amers », on entend deux amers pour lesquels un écart angulaire $ADOA_{ij}$ a été déterminé. Ainsi, dans l'exemple décrit, M - 1 couples d'amers sont donc formés lors de l'étape 120.

De manière générale,

$$ADOA = D.AOA,$$

où D est une matrice de transition.

La matrice de transition *D* est par exemple une matrice de taille (M - 1, *M*) et de rang M - 1.

Parmi l'ensemble des possibilités, la matrice D est choisie avantageusement selon l'invention comme suit :

$$D = \begin{bmatrix} 1 & -1 & 0 & \cdots & 0 \\ 0 & 1 & -1 & \ddots & \vdots \\ \vdots & \ddots & \ddots & \ddots & 0 \\ 0 & 0 & \cdots & 1 & -1 \end{bmatrix}.$$

Dans ce cas, chaque composante $ADOA_{ij}$ correspond à un écart angulaire entre un couple d'amers voisinant selon l'ordre défini par la numérotation de ces amers. Selon un exemple de réalisation, les amers sont numérotés selon leur position géographique. Cela permet de réaliser les mesures sur une seule rotation de l'instrument de pointage angulaire en respectant une pseudo-symétrie dans l'exploitation des mesures de gisement.

Lors de l'étape suivante 130, pouvant être mise en œuvre avant les étapes 110 et 120, le module de calcul 22 vérifie un critère d'observabilité.

En particulier, lors de cette étape, le module de calcul 22 vérifie si les positions respectives des amers 14-1 à 14-N et une position connue du dispositif mobile 12 permettent de calculer ou de préciser une nouvelle position du dispositif mobile 12.

Pour cela, le module de calcul 22 détermine un cercle de régression de centre $(\hat{x}_c, \hat{y}_c)$ et de rayon $\hat{R}_c$. Ce cercle est déterminé en minimisant un critère d'écart quadratique moyen.

Autrement dit, ce cercle est déterminé en utilisant l'expression suivante :

$$\{\hat{x}_c, \hat{y}_c, \hat{R}_c\} = \min_{\{x_c, y_c, R_c\}} C(\{\hat{x}_c, \hat{y}_c, \hat{R}_c\}) =$$

$$= \min_{\{x_c, y_c, R_c\}} \left( \frac{1}{\sum_{i=0}^{M} \frac{1}{\sigma_i^2}} \sum_{i=0}^{M} \frac{1}{\sigma_i^2} \left( \sqrt{(x_i - x_c)^2 + (y_i - y_c)^2} - R_c \right)^2 \right),$$

où

$x_0, y_0$ est la position connue du dispositif mobile 12 par exemple dans un repère terrestre ;

$\sigma_0$ est l'écart-type de la position connue du dispositif mobile 12 (on considère ici des précisions de localisation définies par des erreurs circulaires probables « ECP » à 1 sigma) ;

$(x_i, y_i)$ est la position de l'amer associé à l'indice *i*, $1 \le i \le M$ dans le même repère terrestre ; et

$\sigma_i$ est l'écart-type de la position de l'amer associé à l'indice *i*.

Ce minimum est déterminé par exemple en appliquant une méthode de descente du gradient de la fonction *C*, c'est-à-dire en utilisant les expressions $\frac{\partial C}{\partial x_c}$, $\frac{\partial C}{\partial y_c}$ et $\frac{\partial C}{\partial R_c}$ .

Le critère d'observabilité est rempli lorsqu'au moins l'une des positions des amers 14-1 à 14-N ou la position connue du dispositif mobile 12 est éloignée du cercle de régression d'au moins une distance prédéterminée. Cela signifie alors que ces positions n'appartiennent pas à un même cercle et le système composé des amers 14-1 à 14-N et du dispositif mobile 12 est donc observable.

Autrement dit, le système est observable lorsque :

$$\max_i \left( \left| \sqrt{(x_i - x_c)^2 + (y_i - y_c)^2} - R_c \right| \right) > \alpha \max_i \sigma_i$$

où

$$\alpha \max_i \sigma_i$$ est ladite distance prédéterminée ; et

$\alpha$ est un coefficient de marge (que l'on peut fixer à 10 selon un exemple de réalisation).

Le module de calcul 22 met œuvre les étapes 140 et 150 suivantes lorsque le critère d'observabilité est rempli. Dans le cas contraire, le procédé est par exemple à nouveau mis en œuvre lorsque le dispositif mobile 12 est dans une position différente.

Lors de l'étape 140, le module de calcul 22 détermine une approximation initiale, dénotée par la suite par X, de la position du dispositif mobile 12.

En particulier, selon l'invention, cette approximation initiale *X* est déterminée en minimisant l'écart quadratique moyen d'un pseudo modèle d'observation linéaire qui s'interprète comme le point d'intersection « moyen » d'une pluralité d'iso-courbes. Autrement dit, ladite approximation initiale *X* est déterminée comme un point représentatif des points d'intersection d'une pluralité d'iso-courbes. Ce point représentatif est obtenu en minimisant un critère d'écart quadratique moyen d'un module d'observation linéaire, expliqué en détail par la suite, et peut être vu comme un point « moyen » desdits points d'intersection.

Chaque iso-courbe représente un arc de cercle compris entre un couple d'amers tel que l'angle rapporté au centre du cercle vaut le double de l'écart angulaire perçu par le dispositif mobile entre ce couple d'amers.

Autrement dit, en référence à la figure 3, chaque iso-courbe, définie à partir d'un couple $(A_{k1}, A_{k2})$ d'amers perçu sous un angle $ADOA_{Ak1,Ak2}$, représente un arc de cercle joignant $A_{k1}$ à $A_{k2}$ dont le centre $C_1$ est situé sur la médiatrice de la corde $(A_{k1}, A_{k2})$ à une distance telle que l'angle $\phi_1 = (A_{k1}, C_1, A_{k2})$ vaille le double de l'écart angulaire $ADOA_{Ak1,Ak2}$ entre ce couple d'amers.

La détermination d'une telle approximation initiale X est illustrée schématiquement sur la figure 3 dans le cas de deux couples d'amers $(A_{k1}, A_{k2})$ et $(A_{k3}, A_{k4})$. Dans l'exemple de cette figure 3, l'arc de cercle entre le couple d'amers $(A_{k1}, A_{k2})$ est d'angle $\phi_1$ qui est égal au double de l'écart angulaire $ADOA_{k1k2}$ entre ce couple d'amers, et l'arc de cercle entre le couple d'amers $(A_{k3}, A_{k4})$ est d'angle $\phi_2$ égal au double de l'écart angulaire $ADOA_{k3k4}$ entre ce couple d'amers. Le centre de l'arc de cercle entre le couple d'amers $(A_{k1}, A_{k2})$ est dénoté par $C_1$ et le centre de l'arc de cercle entre le couple d'amers $(A_{k3}, A_{k4})$ est dénoté par $C_2$. Ainsi, dans cette exemple, l'approximation initiale *X*, c'est-à-dire le point représentatif du point d'intersection des arcs de cercle illustrés, est le point d'intersection lui-même de ces arcs. Il est clair qu'en présence par exemple d'un troisième arc de cercle, les points d'intersection de ces arcs ne coïncideraient pas nécessairement entre eux à cause des imprécisions des mesures et des positions des amers. Dans ce cas, l'approximation initiale X serait déterminé comme un point d'intersection « moyen » des points d'intersection de chaque couple d'arcs, selon le modèle d'observation expliqué ci-dessous.

Pour déterminer l'approximation initiale *X,* le module de calcul 22 détermine pour chaque arc de cercle construit, les coordonnées $C_i$ de son centre et son rayon $d_i$.

Chaque rayon $d_i$ est déterminé en utilisant l'égalité suivante :

$$d_i = \frac{d}{2}\sqrt{1 + \left(\frac{1}{\tan \phi}\right)^2}$$

où

$d$ est la distance séparant le couple d'amers formant l'arc de cercle correspondant ;

$\phi$ est l'angle ADOA mesuré entre ce couple d'amers.

Les coordonnées $C_i$ peuvent être déterminées en utilisant également les valeurs de $d$ et de $\phi$ en fonction du repère choisi.

Ensuite, pour déterminer le point d'intersection *X,* le module de calcul 22 utilise la relation vectorielle suivante, définie pour chaque couple d'arc de cercle de centres $C_i$ et $C_j$, et de rayons $d_i$ et $d_j$ :

$$f\left(d_i, d_j\right) = A\left(d_i, d_j\right).X,$$

avec

$$f\big(d_i,d_j\big) = \overrightarrow{C_iC_j}.\overrightarrow{OC_j} + \frac{1}{2}\big(d_i^2 - C_iC_j^2 - d_j^2\big),$$

$$A\big(d_i,d_j\big) = \overrightarrow{C_iC_j},$$

où

$O$ est le centre du repère choisi.

La relation vectorielle précédente définit donc un « pseudo » modèle d'observation linéaire de $X$ (déduit des rayons $d_i$ et des centres $C_i$, eux-mêmes déduits des mesures initiales). En particulier, $f(d) = A(d).X$ en l'absence d'erreur de mesure. L'approximation initiale $X$ peut donc être obtenue en minimisant le critère d'écart quadratique moyen des résidus linéaires suivants :

$$f(d) - A(d).X$$

où le vecteur $f$ et la matrice $A$ sont construits à partir de l'ensemble des écarts angulaires $ADOA$ et des positions des amers.

La valeur $\hat{X}_0$ de minimum est donnée par l'expression suivante :

$$\hat{X}_0 = A(d)^+ f(d)$$

où la matrice $A(d)^+$ est la matrice pseudo-inverse de la matrice $A(d)$, déterminée par l'expression suivante :

$$A(d)^+ = \big(A(d)^t A(d)\big)^{-1} A(d)^t.$$

Lors de l'étape suivante 150, le module de calcul 22 met en œuvre un algorithme d'optimisation et détermine une approximation suivante de la position du dispositif mobile 12 à partir d'une approximation précédente, en utilisant une relation itérative. Lors de la première mise en œuvre de l'étape 150, l'approximation précédente est égale à l'approximation initiale déterminée lors de l'étape 140. Puis, l'étape 150 est par exemple réitérée plusieurs fois pour obtenir une précision souhaitée de la position du dispositif mobile 12.

Lors de l'étape 150, chaque approximation suivante est par exemple obtenue en appliquant un estimateur du maximum de vraisemblance consistant à minimiser un critère de moindres carrés. Par exemple, avec un algorithme de type Gauss-Newton, l'approximation suivante $u_{i+1}$ peut être trouvée à partir de l'approximation précédente $u_i$ ($u_0$ correspondant à l'approximation initiale déterminée lors de l'étape 140) en utilisant l'expression suivante :

$$u_{i+1} = u_i + (H^t D^t (D.B_{AOA}.D^t)^{-1} DH)^{-1}.H^t D^t.(D.B_{AOA}D^t)^{-1}D(AOA - h_{AOA}(u_i))$$

où

$AOA$ est le vecteur de mesures de gisement ;

$B_{AOA}$ est la matrice de covariance du vecteur $AOA$ ;

$h_{AOA}$ est la fonction d'observation des gisements, telle que :

$$h_{AOA}(X) = \alpha_{ref} - \mathrm{atan}\left(\frac{y_i-y}{x_i-x}\right)$$

avec

$(x_i, y_i)$ correspondant à la position de l'amer $i$ ;

$(x, y)$ coordonnées de $X$ ;

$\alpha_{ref}$ la référence angulaire des mesures de gisement

atan la fonction arc tangente ;

$H$ est la matrice jacobienne associée à $h_{AOA}$ :

$$H = \frac{\partial AOA}{\partial X}.$$

Finalement, avec cet estimateur du maximum de vraisemblance, la précision de l'estimation est optimale et peut être déterminée selon l'expression suivante de la Borne de Cramer-Rao :

$$BCR = (H^t B^{-1} H)^{-1}.$$

On conçoit alors que la présente invention présente un certain nombre d'avantages. Tout d'abord, l'invention permet de déterminer ou de préciser la position d'un dispositif mobile en utilisant pleinement un nombre quelconque de mesures de gisement sur des amers de positions imprécises et en vérifiant initialement l'observabilité de cette position.

Cette détermination est faite en utilisant une approche statistique globale optimale prenant en compte à la fois des imprécisions sur la position des amers et des imprécisions sur les mesures de direction, tout en restant efficace et sans biais.

Enfin, grâce à l'invention, il est possible d'estimer la précision de la solution obtenue.

## Revendications

1. Procédé de recalage sur une pluralité d'amers (14-1, ..., 14-N) lors de la géolocalisation d'un dispositif mobile (12), comprenant les étapes suivantes :

   - acquisition (110) de M mesures de gisement des amers (14-1, ..., 14-N) par rapport à un repère de référence, des positions des amers (14-1, ..., 14-N) et des précisions associées à ces positions, lesdites mesures de gisement formant un vecteur de mesures de gisement ;
   - transformation (120) du vecteur de mesures de gisement en un vecteur d'écarts angulaires en utilisant une matrice de transition telle que chaque composante du vecteur d'écarts angulaires correspond à un écart angulaire entre un couple d'amers (14-1, ..., 14-N) ;
   - détermination (140) d'une approximation initiale de la position du dispositif mobile (12) par un modèle d'observation linéaire, ladite approximation initiale étant déterminée comme un point représentatif des points d'intersection d'une pluralité d'iso-courbes, chaque iso-courbe représentant un arc de cercle compris entre un couple d'amers (14-1, ..., 14-N) et d'angle rapporté au centre du cercle valant le double de l'écart angulaire entre ce couple d'amers (14-1, ..., 14-N) ;
   - détermination (150) d'une approximation suivante de la position du dispositif mobile (12) et de la précision associée à partir d'une approximation précédente, en utilisant une relation itérative, l'approximation précédente étant initialement égale à l'approximation initiale et comprenant en outre une étape de vérification (130) d'un critère d'observabilité comprenant la détermination d'un cercle de régression à partir de la position de chaque amer et d'une position connue du dispositif mobile (12), le cercle de régression étant obtenu en minimisant un critère d'écart quadratique moyen, les étapes (140, 150) de détermination de l'approximation initiale et de l'approximation suivante étant mises en œuvre lorsque le critère d'observabilité est rempli, dans lequel le critère d'observabilité est rempli lorsqu'au moins l'une desdites positions est éloignée du cercle de régression d'une distance prédéterminée.

2. Procédé selon l'une quelconque des revendications précédentes, dans lequel l'étape de détermination (140) de l'approximation initiale comprend pour un couple d'amers (14-1, ..., 14-N), la détermination d'un centre et d'un rayon du cercle formant l'arc de cercle correspondant à ce couple.

3. Procédé selon la revendication 2, dans lequel l'étape de détermination (140) de l'approximation initiale comprend la détermination de l'approximation initiale en minimisant un critère d'écart quadratique moyen des résidus du modèle d'observation linéaire, le modèle d'observation linéaire étant construit sur l'ensemble desdits centres et rayons.

4. Procédé selon la revendication 3, dans lequel le point représentatif des points d'intersection de la pluralité d'iso-courbes est le résultat de ladite minimisation.

5. Procédé selon l'une quelconque des revendications précédentes, dans lequel la matrice de transition est choisie de sorte que chaque couple d'amers (14-1, ..., 14-N) comprenne deux amers (14-1, ..., 14-N) voisinant selon un ordre défini par les positions géographiques de ces amers (14-1, ..., 14-N).

6. Procédé selon l'une quelconque des revendications précédentes, dans lequel chaque approximation suivante est obtenue en appliquant un estimateur du maximum de vraisemblance, de préférence avec un algorithme de type Gauss-Newton.

7. Procédé selon l'une quelconque des revendications précédentes, dans lequel le nombre M est strictement supérieur à 3.

8. Produit programme d'ordinateur comportant des instructions logicielles qui, lorsque mises en œuvre par un équipement informatique, mettent en œuvre le procédé selon l'une quelconque des revendications précédentes.

9. Dispositif de recalage (10) sur une pluralité d'amers (14-1, ..., 14-N) lors de la géolocalisation d'un dispositif mobile (12), comprenant des moyens techniques (21, 22, 23) adaptés pour mettre en œuvre le procédé selon l'une quelconque des revendications 1 à 7.

**Patentansprüche**

1. Neuausrichtungsverfahren basierend auf einer Vielzahl von Referenzpunkten (14-1, ..., 14-N) bei der Geolokalisierung einer mobilen Vorrichtung (12), umfassend die folgenden Schritte:

   - Erfassen (110) von M Peilungsmessungen der Referenzpunkte (14-1, ..., 14-N) in Bezug auf ein Bezugskoordinatensystem, der Positionen der Referenzpunkte (14-1, ..., 14-N) und der mit diesen Positionen assoziierten Genauigkeiten, wobei die Peilungsmessungen einen Peilungsmessungsvektor bilden;
   - Transformieren (120) des Peilungsmessungsvektors in einen Vektor von Winkelabweichungen unter Verwendung einer Übergangsmatrix, sodass jede Komponente des Vektors von Winkelabweichungen einer Winkelabweichung zwischen einem Paar von Referenzpunkten (14-1, ..., 14-N) entspricht;
   - Bestimmen (140) einer anfänglichen Annäherung der Position der mobilen Vorrichtung (12) durch ein lineares Beobachtungsmodell, wobei die anfängliche Annäherung als ein Punkt bestimmt wird, der repräsentativ für die Schnittpunkte einer Vielzahl von Isokurven ist, wobei jede Isokurve einen Kreisbogen darstellt, der zwischen einem Paar von Referenzpunkten (14-1, ..., 14-N) eingeschlossen ist und dessen Winkel, bezogen auf den Mittelpunkt des Kreises, das Doppelte des Winkelabstands zwischen diesem Paar von Referenzpunkten (14-1, ..., 14-N) ist;
   - Bestimmen (150) einer nächsten Annäherung der Position der mobilen Vorrichtung (12) und der assoziierten Genauigkeit anhand einer vorherigen Annäherung unter Verwendung einer iterativen Beziehung, wobei die vorherige Annäherung anfänglich gleich wie die anfängliche Annäherung ist und ferner einen Schritt eines Überprüfens (130) eines Beobachtbarkeitskriteriums umfasst, umfassend die Bestimmung eines Regressionskreises anhand der Position von jedem Referenzpunkt und einer bekannten Position der mobilen Vorrichtung (12), wobei der Regressionskreis durch Minimieren eines Kriteriums einer mittleren quadratischen Abweichung erlangt wird, wobei die Schritte (140, 150) eines Bestimmens der anfänglichen Annäherung und der nächsten Annäherung durchgeführt werden, wenn das Beobachtbarkeitskriterium erfüllt ist, wobei das Beobachtbarkeitskriterium erfüllt ist, wenn mindestens eine der Positionen um einen vorbestimmten Abstand von dem Regressionskreis entfernt ist.

2. Verfahren nach einem der vorherigen Ansprüche, wobei der Schritt eines Bestimmens (140) der anfänglichen Annäherung für ein Paar von Referenzpunkten (14-1, ..., 14-N) das Bestimmen eines Mittelpunkts und eines Radius des Kreises, der den diesem Paar entsprechenden Kreisbogen bildet, umfasst.

3. Verfahren nach Anspruch 2, wobei der Schritt eines Bestimmens (140) der anfänglichen Annäherung das Bestimmen der anfänglichen Annäherung durch Minimieren eines Kriteriums einer mittleren quadratischen Abweichung der Reste des linearen Beobachtungsmodells umfasst, wobei das lineare Beobachtungsmodell über die Gesamtheit der genannten Mittelpunkte und Radien aufgebaut wird.

4. Verfahren nach Anspruch 3, wobei der Punkt, der repräsentativ für die Schnittpunkte der Vielzahl von Isokurven ist, das Resultat der genannten Minimierung ist.

5. Verfahren nach einem der vorherigen Ansprüche, wobei die Übergangsmatrix gewählt ist, sodass jedes Paar von Referenzpunkten (14-1, ..., 14-N) zwei benachbarte Referenzpunkte (14-1, ..., 14-N) in einer Reihenfolge umfasst, die durch die geografischen Positionen dieser Referenzpunkte (14-1, ..., 14-N) definiert ist.

6. Verfahren nach einem der vorherigen Ansprüche, wobei jede nächste Annäherung durch Anwenden eines Maximum-Likelihood-Schätzers, vorzugsweise mit einem Algorithmus vom Typ Gauß-Newton, erlangt wird.

7. Verfahren nach einem der vorherigen Ansprüche, wobei die Anzahl M strikt größer als 3 ist.

8. Computerprogrammprodukt, umfassend Softwareanweisungen, die, wenn sie von einer Rechenvorrichtung durchgeführt werden, das Verfahren nach einem der vorherigen Ansprüche durchführen.

9. Neuausrichtungsvorrichtung (10) auf eine Vielzahl von Referenzpunkten (14-1, ..., 14-N) bei der Geolokalisierung einer mobilen Vorrichtung (12), umfassend technische Einrichtungen (21, 22, 23), die angepasst sind, um das Verfahren nach einem der Ansprüche 1 bis 7 durchzuführen.

**Claims**

1. A reorienting method based on a plurality of landmarks (14-1, ..., 14-N) when geolocating a mobile device (12), comprising the following steps:

   - acquiring (110) M sighting measurements of the landmarks (14-1, ..., 14-N) with respect to a reference landmark, positions of the landmarks (14-1, ..., 14-N) and precisions associated with these positions, said sighting measurements forming a sighting measurement vector;
   - transforming (120) the sighting measurement vector into an angular error vector using a transition matrix such that each component of the angular error vector corresponds to an angular error between a pair of landmarks (14-1, ..., 14-N);
   - determining (140) an initial approximation of the position of the mobile device (12) using a linear observation model, said initial approximation being determined as a representative point of the points of intersection of a plurality of iso-curves, each iso-curve representing an circular arc comprised between a pair of landmarks (14-1, ..., 14-N) and with an angle at the center of the circle equal to twice the angular error between said pair of landmarks (14-1, ..., 14-N);
   - determining (150) a following approximation of the position of the mobile device (12) and the associated precision from a preceding approximation, by using an iterative relationship, the preceding approximation initially being equal to the initial approximation and further comprising a step of verifying (130) an observability criterion comprising determining a regression circle from the position of each landmark and a known position of the mobile device (12), the regression circle being obtained by minimizing a mean squared error criterion, the steps (140, 150) for determining the initial approximation and the following approximation being implemented when the observability criterion is met, wherein the observability criterion is met when at least one of said positions is moved away from the regression circle by a predetermined distance.

2. The method according to any one of the preceding claims, wherein the determining step (140) for determining the initial approximation comprises, for a pair of landmarks (14-1, ... , 14-N), determining a center and a radius of the circle forming the arc of circle corresponding to this pair.

3. The method according to claim 2, wherein the determining step (140) for determining the initial approximation comprises determining the initial approximation by minimizing the mean squared error criterion of the residues of the linear observation model, the linear observation model being built on all of said centers and radii.

4. The method according to claim 3, wherein the point representative of the points of intersection of the plurality of iso-curves is the result of said minimization.

5. The method according to any one of the preceding claims, wherein the transition matrix is selected so that each pair of landmarks (14-1, ..., 14-N) comprises two adjacent landmarks (14-1, ..., 14-N) according to an order defined by the geographical positions of these landmarks (14-1, ..., 14-N).

6. The method according to any one of the preceding claims, wherein each following approximation is obtained by applying a maximum likelihood estimator, preferably with a Gauss-Newton algorithm.

7. The method according to any one of the preceding claims, wherein the number M is strictly greater than 3.

8. A computer program product including software instructions which, when implemented by computer equipment, implement the method according to any one of the preceding claims.

9. A reorienting device (10) on a plurality of landmarks (14-1, ..., 14-N) when geolocating a mobile device (12), comprising technical means (21, 22, 23) suitable for implementing the method according to any one of claims 1 to 7.

## FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   WO 2015078000 A1